# EUROPEAN PATENT SPECIFICATION

(11) **EP 3 495 330 B1**
(45) Date of publication and mention of the grant of the patent: **24.06.2020**
(21) Application number: 18210671.6
(22) Date of filing: 06.12.2018
(51) Int. Cl.: C03C 3/066, C03C 3/247, C03C 8/08, C03C 8/20, C23D 5/00, F24C 15/00, C23D 1/00, C23D 7/00, F24C 15/02, F27D 1/00

(54) **COATING COMPOSITION AND COOKING APPLIANCE**
BESCHICHTUNGSZUSAMMENSETZUNG UND KOCHGERÄT
COMPOSITION DE REVÊTEMENT ET APPAREIL DE CUISSON

(30) Priority: 06.12.2017 KR 20170166570
(43) Date of publication of application: 12.06.2019
(73) Proprietor: LG Electronics Inc., Yeongdeungpo-Gu Seoul 07336 (KR)
(72) Inventor: Choi, Wongyu, 08592 Seoul (KR); Kim, Youngseok, 08592 Seoul (KR); Choi, Suyeon, 08592 Seoul (KR)
(74) Representative: Vossius & Partner Patentanwälte Rechtsanwälte mbB

(56) References cited:
- EP-A1- 0 887 593
- EP-A1- 2 662 340
- EP-A1- 3 357 876
- US-B2- 9 072 400

## Description

This application claims priority to Korean Patent Application No. 10-2017-0166570 filed on December 06, 2017 in Korea.

The embodiment relates to a coating composition and a cooking appliance employing the same.

The European patent application EP 2 662 340 A1, describes an enamel composition including a glass frit comprising P₂O₅, SiO₂, B₂O₃, Al₂O₃, R₂O (R being an alkali metal), a chemical enhancement component including TiO₂ and/ or ZrO₂ and an enhancement component including at least one of CoO, NiO, MnO₂ and Fe₂O₃.

Enamel is produced by coating vitreous glaze onto the surface of a metallic plate. In general, enamel is used for a cooking appliance such as a microwave and an oven. Meanwhile, the enamel is classified into acid-resistant enamel to prevent oxidation and heat-resistant enamel that is able to withstand a high temperature, depending on the type or the use of the glaze. In addition, the enamel is classified into aluminum enamel, zirconium enamel, titanium enamel, and soda glass enamel, depending on materials added to the enamel.

Regarding the enamel, after preparing an enamel material, that is, glass frit, the glass frit is pulverized through a dry-type process or a wet-type process, thereby forming glass powders. Then, the glass powders are coated on a target to form an enamel layer.

In this case, the enamel layer may be formed after the glass powders are coated and subject to a plastic process at a specific temperature.

The enamel layer is applied to an oven to realize the cleaning performance. However, various germs may be propagated at the enamel layer in a sealed space. In addition, in cooking, germs inside the oven may be infiltrated into foods.

Accordingly, a coating composition having a novel structure is required to inhibit such germs from being infiltrated and propagated.

The embodiment is to provide a coating composition having improved cleaning performance and an antibacterial effect, and a cooking appliance employing the same. The present invention is defined by the features of the independent claims. The dependent claims relate to further aspects of the invention.

In one embodiment, a coating composition includes a glass frit including P₂O₅, SiO₂, B₂O₃, a group I-based metal oxide, BaO, NaF, TiO₂, SnO, ZnO, and an adhesion enhancement component, the P₂O₅ is included by 40 wt% to 55 wt% based on a total weight of the glass frit, the SiO₂ is included by 5 wt% to 15 wt% based on the total weight of the glass frit, the B₂O₃ is included by 5 wt% to 10 wt% based on the total weight of the glass frit, the group I-based metal oxide is included by 3 wt% to 10 wt% based on the total weight of the glass frit, the ZnO is included by 10 wt% to 25 wt% based on the total weight of the glass frit, and the TiO₂ is included by 0.1 wt% to 5 wt% based on the total weight of the glass frit.

As described above, the coating composition according to the embodiment may have the improved cleaning performance and endurance.

Accordingly, the cleaning performance of the cooking appliance may be improved. In detail, the cooking appliance may be simply soaked into the water to be easily cleaned up.

In other words, even if the surface of the cooking appliance and the door surface facing a cooking chamber in the state that the cooking chamber is shielded are contaminated with foods and organic materials, which may occur in the cooking process, the surface of the cooking appliance and the door surface may be simply soaked into water to be easily cleaned up.

In addition, since the functional layer coated by using the coating composition has excellent cleaning performance, the inner part of the cooking appliance may be easily cleaned up even with less energy.

In addition, the coating composition according to the embodiment may have an improved antibacterial effect. In detail, according to the embodiment, the coating composition may have the improved antibacterial effect without influence exerted on the cleaning performance and the endurance.

Accordingly, the multiplication of germs, which is to be generated or propagated in the cooking appliance, may be prevented.

In addition, according to the embodiment, since the coating composition has a softening point and the coefficient of thermal expansion coefficient at a specific temperature or more, the coating composition may endure cooking at a higher temperature and cleaning for a long time.

The present invention will become more fully understood from the detailed description given herein below and the accompanying drawings, which are given by illustration only, and thus are not limitative of the present invention, and wherein:
FIG. 1 is a front view illustrating a cooking appliance, according to the embodiment.
FIGS. 2 and 3 are partially enlarged views of an inner surface of the cavity of FIG. 1.
FIGS. 4 and 5 are partially enlarged views of an opposition surface of a door illustrated in FIG. 1.

Hereinafter, a coating composition according to an embodiment and a cooking appliance including the coating composition will be described with reference to accompanying drawings.

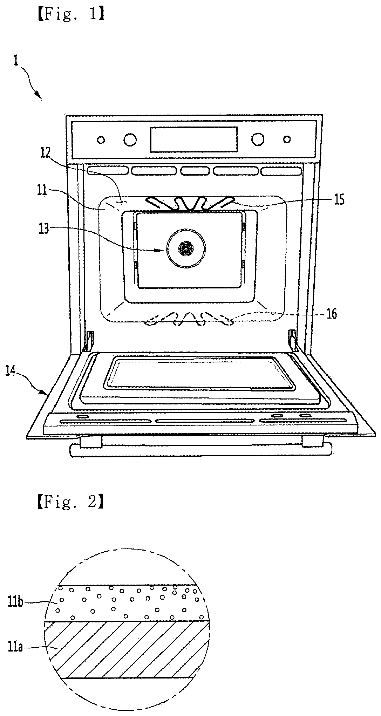

FIG. 1 is a front view illustrating a cooking appliance, according to the embodiment.

Referring to FIG. 1, a cooking appliance 1 may include a cavity 11 to define a cooking chamber 12, a door 14 to selectively open/close the cooking chamber 12, and at least one heating source provided to heat a cooking matter in the cooking chamber 12.

In detail, the cavity 11 may be formed in a hexahedron shape having an open front face. The heating source may include a convection assembly 13 to discharge heated air into the cavity 11, an upper heater 15 disposed at an upper portion of the cavity 11, and a lower heater 16 disposed at a lower portion of the cavity 11. In this case, the heating source does not have to include all the convection assembly 13, the upper heater 15, and the lower heater 16. In other words, the heating source may include at least one of the convection assembly 13, the upper heater 15, and the lower heater 16.

The upper heater 15 and the lower heater 16 may be disposed inside or outside the cavity 11.

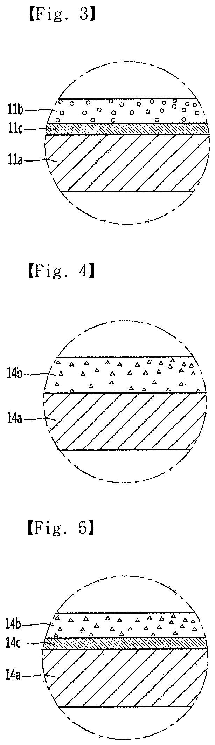

Referring to FIGS. 2 and 5, functional layers may be disposed on an inner surface of the cavity 11 and a back side of the door 14.

The functional layer may include coating composition to be described below. The functional layer may be formed by coating the inner surface of the cavity 11 and the back side of the door 14. In other words, the functional layer may be a coating layer.

The functional layer may improve heat resistance, chemical resistance, and stain resistance of the inner surface of the cavity 11 and the back side of the door 14.

Referring to FIGS. 2 and 3, the functional layer may be disposed in the cavity.

The cavity 11 may include a metallic layer 11a and a functional layer 11b on the metallic layer 11a.

The metallic layer 11a may be a base material of the cavity.

Referring to FIG. 2, the functional layer 11b may be disposed in direct contact with the metallic layer 11a.

In addition, referring to FIG. 3, the functional layer 11b may be disposed in indirect contact with the metallic layer 11a. In detail, a buffer layer 11c may be interposed between the metallic layer 11a and the functional layer 11b. The buffer layer 11c may include an adhesive layer. In other words, the adhesive force between the metallic layer 11a and the functional layer 11b may be improved by the buffer layer 11c.

Referring to FIGS. 4 and 5, the functional layer may be provided on the back side of the door 14. In detail, the functional layer may be provided on the back side of the door 14 facing the cooking chamber 12 in the state that the cooking chamber 12 is shielded. The functional layer may improve heat resistance, chemical resistance, and stain resistance of the opposite surface of the door 14.

The cavity 14 may include a metallic layer 14a and a functional layer 14b on the metallic layer 14a.

The metallic layer 14a may be a base material of the cavity.

Referring to FIG. 4, the functional layer 14b may be disposed in direct contact with the metallic layer 14a.

In addition, referring to FIG. 5, the functional layer 14b may be provided in indirect contact with the metallic layer 14a. In detail, the buffer layer 14c may be interposed between the metallic layer 14a and the functional layer 14b. The buffer layer 14c may include an adhesive layer. In other words, the adhesive force between the metallic layer 14a and the functional layer 14b may be improved by the buffer layer 14c.

The functional layer may be formed by coating the coating composition onto the inner surface of the cavity 11 and the back side of the door 14. In detail, the functional layer may be formed by coating the inner surface of the cavity 12 and the back side of the door 14 to improve the heat resistance, chemical resistance, and stain resistance of the inner surface of the cavity 11 and the opposite surface of the door 14.

Hereinafter, the coating composition coated on the cavity and the door of the cooking appliance will be described.

According to an embodiment, the coating composition may include glass frit including P₂O₅, SiO₂, B₂O₃, a group I-based metal oxide, BaO, NaF, TiO₂, SnO, ZnO, and an adhesion enhancement component.

The P₂O₅ may be included by about 55 wt% or less based on a total weight of the glass frit. The P₂O₅ may be included by about 40 wt% to about 55 wt% based on the total weight of the glass frit.

The P₂O₅ may be included in the coating composition to improve the cleaning performance of the coating composition. When the P₂O₅ is included by less than about 40 wt% based on the total weight of the glass frit, the cleaning performance of the coating composition may be degraded. When the P₂O₅ is included by more than about 55 wt% based on the total weight of the glass frit, the thermal characteristic of the coating composition may be degraded and the vitrification of the coating composition may be deteriorated.

The SiO₂ may be included by about 15 % or less based on the total weight of the glass frit. The SiO₂ may be included by about 5 wt% to about 15 wt% based on the total weight of the glass frit.

The SiO₂ may be included in the coating composition to form the glass structure of the coating composition, and to form the frame of the glass structure. In addition, the SiO₂ may improve acid-resistance of the coating composition.

When the SiO₂ is included by less than about 5 wt% based on the total weight of the glass frit, the glass structure of the coating composition becomes weakened and thus the endurance of the functional layer may be degraded. When the SiO₂ is included by more than about 15 wt% based on the total weight of the glass frit, the cleaning performance of the coating composition may be degraded.

The B₂O₃ is included by about 10 wt% or less based on a total weight of the glass frit. In detail, the B₂O₃ is included by about 5 wt% to about 10 wt% based on the total weight of the glass frit.

The B₂O₃ may enlarge the vitrification region of the glass fit and may properly adjust the thermal expansion coefficient of the coating composition according to the embodiment.

When the B₂O₃ is included by less than about 5 wt% based on the total weight of the glass fit, the vitrification region is reduced and thus the glass structure is weakened. Accordingly, the endurance of the functional layer formed of the coating composition may be degraded. When the B₂O₃ is included by more than 10 wt% based on the total weight of the glass frit, the cleaning performance of the coating composition may be degraded.

The group I-based metal oxide may include at one metallic oxide of Na₂O and K₂O. In detail, the group I-based metal oxide may include Na₂O and K₂O. In other words, the glass frit may include both Na₂O and K₂O.

The group I-based metal oxide may be included by about 10 wt% or less based on the total weight of the glass frit. In detail, the group I-based metal oxide is included by about 3 wt% to about 10 wt% based on the total weight of the glass frit,

The group I-based metal oxide may be included in the coating composition to improve the cleaning performance of the coating composition. The group I-based metal oxide may improve the cleaning performance of the coating composition together with P₂O₅.

When the group I-based metal oxide is included by less than 3 wt% based on the total weight of the glass frit, the cleaning performance of the coating composition may be degraded. When the group I-based metal oxide is included by more than about 10 wt% based on the total weight of the glass frit, the thermal characteristic of the coating composition may be degraded.

The P₂O₅, Na₂O and K₂O may form an alkali phosphate glass structure. In addition, P₂O₅, Na₂O, and K₂O may provide improved cleaning performance to the coating composition according to the embodiment.

In other words, since the glass frit includes P₂O₅, Na₂O and K₂O, when the functional layer formed of the coating composition according to the embodiment is contaminated with food, the functional layer may be easily cleaned up by water.

The BaO may be included by about 5 wt% or less based on the total weight of the glass frit. In detail, the BaO is included by about 0.1 wt% to about 5 wt% based on the total weight of the glass frit.

The BaO is included in the coating composition to enhance the glass structure of the coating composition, and may continuously form the structure capable of maintaining the cleaning performance of the P₂O₅.

When BaO is included by about 0.1 wt% or less based on the total weight of the glass frit, the glass structure of the coating composition is weakened, thereby degrading the endurance and the cleaning performance of the functional layer formed of the coating composition. When BaO is included by more than about 0.1 wt% based on the total weight of the glass frit, the moisture absorption performance is increased by BaO, so it may be difficult to stably form glass.

NaF may be included by about 2 wt% or less based on the total weight of the glass frit. In detail, NaF may be included by about 0.1 wt% to about 2 wt% based on the total weight of the glass frit.

The NaF may appropriately adjust the surface tension of a coating film formed of the coating composition. The vitrification region of the glass frit may be enlarged by the NaF.

When NaF is included by less than about 0.1 wt% based on the total weight of the glass frit, the vitrification region of the glass frit is reduced, thereby weakening the glass structure. Accordingly, the endurance of the functional layer formed of the coating composition may be degraded. When the group I-based metal oxide is included by more than about 5 wt% based on the total weight of the glass frit, the cleaning performance of the coating composition may be degraded.

The SnO may be included by about 2 wt% or less based on the total weight of the glass frit. In detail, the SnO is included by about 0.1 wt% to about 2 wt% based on the total weight of the glass frit.

The SnO may appropriately adjust the surface tension of a coating film formed of the coating composition.

When SnO is included by less than about 0.1 wt% based on the total weight of the glass frit, the vitrification region of the glass frit is reduced, thereby weakening the glass structure. When the TiO₂ and the SnO are included by more than about 2 wt% based on the total weight of the glass frit, the cleaning performance of the coating composition may be degraded.

The TiO₂ is included by about 5 wt% or less based on a total weight of the glass frit. In detail, the TiO₂ is included by about 0.1 wt% to about 5 wt% based on the total weight of the glass frit.

The TiO₂ may improve the hiding power of the coating composition. In other words, the hiding power of the functional power may be improved by the TiO₂.

When the TiO₂ is included by about 0.1 wt% or less based on the total weight of the glass frit, the hiding power of the functional layer formed of the coating composition may be degraded, so that the color of the buffer layer is viewed from the outside when the TiO₂ is coated on the buffer layer. When the TiO₂ is included by more than about 5 wt% based on the total weight of the glass frit, the cleaning performance of the coating composition may be degraded.

The ZnO may be included by about 25 wt% or less based on the total weight of the glass frit. In detail, the ZnO is included by about 5 wt% to about 25 wt% based on the total weight of the glass frit. In detail, the ZnO is included by about 15 wt% to about 25 wt% based on the total weight of the glass frit.

The ZnO is included in the coating composition to enhance the glass structure of the coating composition, and may continuously form the structure capable of maintaining the cleaning performance of the P₂O₅.

In addition, the ZnO may be included in the coating composition, so the antibacterial effect of the coating composition is improved.

The ZnO, which serves as an inorganic antibacterial agent, is not volatilized or decomposed, which represents excellent thermal stability. The ZnO, which serves as a drug carrier or cosmetics, is not harmful to a human body. The ZnO has a lower price and has gram positive germs and gram negative grams to represent a higher antimicrobial activity. Accordingly, the ZnO has various advantages, so the ZnO has been actively studied.

Meanwhile, although the antimicrobial mechanism of the ZnO has not clearly proved, it is generally known that the antimicrobial effect is produced due to the three following principles.

First, the antimicrobial effect of ZnO nanoparticles may be produced due to ROS (reactive oxygen species) or the damage caused by the ROS. In detail, electrons are trapped due to the oxygen vacancy present on the surface of the ZnO nanoparticles, and the oxidation-reduction reaction may be actively made in the position that the oxygen vacancy is present, thereby causing the ROS. The ROS causes the oxidative stress to be increased, so sterilization may be induced.

Second, it is generally known that the antimicrobial effect of ZnO nanoparticles having solubility is produced due to the emission of the Zn ions. Since Zn ions have an antibacterial effect against various strains, the Zn ions, which are produced from the dissolution of the ZnO nanoparticles in an aqueous solution, may be a main cause of the antimicrobial mechanism of the ZnO nanoparticles.

Third, it is generally known that the antimicrobial mechanism of ZnO nanoparticles is made between the ZnO nanoparticles and germs. ZnO nanoparticles having positive (+) charges are attracted to cell walls of germs electrostatically having negative (-) charges and adsorbed on the cell walls. The ZnO nanoparticles adsorbed on the cell wall of germs can affect membrane fluidity and transport of membrane across the membrane, thereby causing the death of germs.

When ZnO is included by less than about 10 wt% based on the total weight of the glass frit, the antimicrobial effect of the glass structure of the coating composition may be degraded. In addition, the glass structure may be degraded, so the endurance and the cleaning performance of the functional layer formed of the coating composition may be degraded. When the ZnO is included by more than about 25 wt% based on the total weight of the glass frit, the moisture absorption performance may be increased by ZnO, so it is difficult to stably form glass.

Meanwhile, the TiO₂ and the ZnO may be included at specific weight ratio in the coating composition. In detail, the TiO₂ may be included with the weight smaller than the weight of the ZnO.

In detail, the weight of the TiO₂ may be at least 30% smaller than the weight of the ZnO. In more detail, the weight of the TiO₂ may be about 10% to about 30% of the weight of the ZnO.

The weight ratio between the TiO₂ and the ZnO is associated with the endurance and the antimicrobial effect of the coating composition. In detail, when the weight of the TiO₂ is about 10% less than the weight of the ZnO, the antimicrobial effect is maintained. However, the weight of TiO₂ is reduced, so the vitrification region is reduced. Accordingly, the endurance of the coating composition may be degraded. In addition, when the weight of the TiO₂ is about 30% more than the weight of the ZnO, the endurance of the coating composition may be maintained, but the antibacterial effect made by the ZnO may be degraded.

The glass frit may further include at least one of CO₃O₄, NiO, Fe₂O₃ and MnO₂. In detail, the glass frit may include CO₃O₄, NiO, Fe₂O₃ and MnO₂.

The CO₃O₄, NiO, Fe₂O₃ and MnO₂ may increase the adhesion force of the coating composition coated on the base material. In other words, the CO₃O₄, NiO, Fe₂O₃ and MnO₂ may be adhesion enhancement components to enhance adhesion force when the coating composition is coated on the buffer layer on the base material.

When the coating composition is disposed on the buffer layer of the base material by using the CO₃O₄, NiO, Fe₂O₃ and MnO₂, the adhesion force between the buffer layer and the functional layer may be improved, thereby improving the reliability.

The CO₃O₄, NiO, Fe₂O₃ and MnO₂ may be included by about 4 wt% or less based on the total weight of the glass frit. In detail, the CO₃O₄, NiO, Fe₂O₃ and MnO₂ may be included by about 0.1 wt% to about 4 wt% based on the total weight of the glass frit.

Hereinafter, the present invention will be described in more detail through a method for preparing the coating composition according to embodiments and comparative examples. The embodiments are provided only for the illustrative purpose to describe the present invention in more detail. Accordingly, the present invention is not limited to the above embodiment.

### Evaluation of Characteristic

A glass frit material was provided as illustrated in tables 1 and 2. Table 1 shows the composition of the cover coating layer serving as the functional layer, and Table 2 shows the composition of a ground coating layer serving as a buffer layer.

In this case, the NH₄H₂PO₄ was used as the source material of P₂O₅ and Na₂CO₃, K₂CO₃, and BaCo₃ were used as source materials of Na₂O, K₂O, and BaO, respectively. The remaining components were the same as the components as illustrated in table 1.

Thereafter, after mixing the glass frit material, the glass frit material was melted at the temperature of about 1400°C for about one hour to about two hours. Then, the glass frit material was rapidly cooled on the quenching roller, thereby obtaining a glass cullet.

Thereafter, about 0.1 wt% to about 1 wt% of organopolysiloxane was put into the glass cullet, pulverized in a bawl mill through milling for about four hours to about six h ours, and filtered out to have a particle diameter of about 45 *µ*m or less, thereby forming the glass frit.

In this case, the ground coating layer serving as the buffer layer was sprayed on a low carbon steel sheet having the area of 200×200 mm and the thickness of 1 mm by using a corona discharge gun. The voltage of the corona discharge gun was controlled to be in the range of 40 kV to 100 kV, and an amount of the glass frit sprayed on the low carbon steel sheet was 300 g/m².

Thereafter, the glass frit was burnt for 300 seconds to 450 seconds under the temperature condition of 830°C to 870°C, thereby forming the ground coating layer on one surface of the low carbon steel sheet.

Thereafter, the functional layer was formed on the ground coating layer through the process the same as the above process.

Alternatively, the dry-type process and the wet-type process may be used.

In detail, the coating composition was mixed with the water at the ratio of 1:1, clay, and aluminum oxide, borax, bentonite were added to the mixture and was mixed for 10 hours.

Thereafter, the coating composition was sprayed on the low carbon steel sheet having the area of 200×200 mm and the thickness of 1 mm by using the corona discharge gun. An amount of the coating composition sprayed on the low carbon steel sheet was 300 g/m².

Thereafter, the low carbon steel sheet having the coating composition sprayed thereon was burnt under the temperature condition of 840°C to 860°C for 180 seconds to 360 seconds, thereby forming the ground coating layer on one surface of the low carbon steel sheet. Then, the functional layer was formed on the ground coating layer through the process the same as the above process.

Then, the characteristic evaluation of the functional layer prepared according to the embodiments and the comparative example was performed.

In detail, the softening point (Td) and the coefficient of thermal expansion (CTE) of the functional layer were measured, and the cleaning performance of each functional layer was measured through the characteristic test of the cleaning performance.

In detail, to measure the thermal characteristic of the glass, the pellet-shaped sample was burnt under the same conditions as the burning conditions of the coating composition. After both surfaces of the sample were grounded in parallel to each other, the temperature was increased by 10°C /minute through a thermo mechanical analyzer (TMA) to measure the softening point (Td) and the CTE.

In addition, according to the method for measuring the cleaning performance, about 1g of chicken oil, which serves as a contaminant, was slightly applied on the sample surface, which is made by coating enamel on a test body having 200×200 mm, by using a brush. Then, the test body having the contaminant was put into a constant-temperature oven and the contaminant was hardened at the temperature of about 250°C for one hour.

After the contaminant was hardened, the test body was naturally cooled and the hardening degree was checked. Next, the test body was dipped in a water vessel having water at the temperature of 70°C for 10 minutes. The hardened chicken oil and a cherry pie filling serving as an example for a sugar component were wiped out with the force of 3 kgf by using a wet cloth. The contaminated enamel surface was uniformly wiped by using a rod having a flat bottom surface with the diameter of 5 cm. In this case, the number of times of reciprocally wiping was measured and defined as the number of times of cleaning the enamel as illustrated in table 2. The evaluation indexes are shown in following tables 4 and 5.

Then, the characteristic evaluation of the functional layer prepared according to the embodiments and the comparative example was performed.

To measure the antibacterial effect of glass, a composition of the low carbon steel plate having the area of 60×60 mm was burnt, and a test sample having the thickness of 150±50 *µ*m was burnt under the burning condition of the enamel.

According to the manner to measure the antibacterial effect, after 400 *µ*ℓ of colon bacillus solution (1.0·108 cells/m) was dropped on an enamel sample surface having the size of 60×60 mm, a sterile polyethylene film was covered on the enamel sample surface. Then, the enamel sample having the colon bacillus solution was neglected at the temperature of 35°C for 24 hours, the film was removed, and then the result was dipped into 0.85% solution of 50 ml sterile NaCl. Then, 100 *µℓ* of colon bacillus solution was collected, colon bacillus was cultured at the temperature of 35°C for 24 hours, and then the number of remaining germs was counted (JIS Z 2801). The evaluation indexes are shown in the following table 6.

**Table 1, wherein examples 1 and 2 are not according to the invention.**

| | Example 1 (wt%) | Embodiment 1 (wt%) | Example 2 (wt%) | Comparative example (wt%) |
|---|---|---|---|---|
| P₂O₅ | 54.3 | 54.3 | 57.2 | 30.7 |
| Na₂O | 2.8 | 3.7 | 3.1 | 8.5 |
| K₂O | 1.6 | 1.6 | 0.7 | 11.4 |
| BaO | 2.2 | 3.7 | 0.1 | 4.0 |
| ZnO | 23 | 20.1 | 18.3 | 14.1 |
| SiO₂ | 0.1 | 5.5 | 5.5 | 14.7 |
| B₂O₃ | 9.0 | 5.5 | 8.6 | 12.2 |
| SnO | 0.1 | 0.8 | 0.7 | 0.2 |
| TiO₂ | 3.4 | 1.2 | 3.7 | 1.0 |
| Co₃O₄ | 1.0 | 2.0 | 1.0 | 1.9 |
| Fe₂O₃ | 1.0 | 1.0 | 0.1 | 0.8 |
| NaF | 1.5 | 0.6 | 0.6 | 0.5 |

**Table 2**

| | Ground Coating layer (wt%) |
|---|---|
| Na₂O | 15 |
| K₂O | 10.7 |
| Li₂O | 4.2 |
| SiO₂ | 48.8 |
| B₂O₃ | 10.1 |
| TiO₂ | 2.4 |
| Co₃O₄ | 1.0 |
| NiO | 0.5 |
| Fe₂O₃ | 0.8 |
| MnO₂ | 0.5 |
| NaF | 6.0 |

**Table 3**

| The number of times of reciprocating for cleaning up | Performance (level) |
|---|---|
| At least 5 times | 5 |
| At least 15 times | 4 |
| At least 25 times | 3 |
| At least 50 times | 2 |
| More than 50 times | 1 |

**Table 4, wherein examples 1 and 2 are not according to the invention.**

| | Example 1 | Embodiment 1 | Example 2 | Comparative example |
|---|---|---|---|---|
| Softening point (°C) | 550.2 | 521.2 | 502 | 501.5 |
| Coefficient of thermal coefficient (×10⁻⁷/°C) | 91.2 | 95 | 88 | 89 |

**Table 5, wherein examples 1 and 2 are not according to the invention.**

| | Example 1 | Embodiment 1 | Example 2 | Comparative example |
|---|---|---|---|---|
| Cleaning performance | 5 | 5 | 5 | 5 |

**Table 6, wherein examples 1 and 2 are not according to the invention.**

| | The number of germs at the initial stage (cfu/mℓ⁻¹) | The number of germs after 24 hours (cfu/mℓ⁻¹) | Antimicrobial activity value | Antimicrobial activity conversion (%) |
|---|---|---|---|---|
| Sample | 1.0^{∗}10⁻⁷ | 5.06^{∗}10⁸ | 0 | 0 |
| Example 1 | 1.0^{∗}10⁷ | 3.87^{∗}10⁴ | 4.12 | 99.99 |
| Embodiment 1 | 1.0^{∗}10⁷ | 3.97^{∗}10⁴ | 4.16 | 99.99 |
| Example 2 | 1.0^{∗}10⁷ | 3.84^{∗}10⁴ | 4.10 | 99.99 |
| Comparative example | 1.0^{∗}10⁷ | 4.85^{∗}10⁸ | 0.04 | 99.99 |

Referred to table 4 and table 5, it can be recognized that the functional layers prepared by using glass frit have similar softening points and similar thermal expansion coefficients according to the embodiments and the comparative example.

In addition, it can be recognized that the functional layers prepared by using the glass frit according to the embodiments and the comparative example have similar cleaning characteristics.

However, referring to table 6, it can be recognized that the functional layer prepared by using the glass frit according to the comparative example has antimicrobial characteristics much lower than that of the functional layer prepared by using the glass frit according to the embodiments.

In other words, the coating composition according to the embodiment may have improved antimicrobial characteristic without influence exerted on the cleaning performance by adding ZnO having a specific composition ratio to the coating composition.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A coating composition comprising:
a glass frit including P₂O₅, SiO₂, B₂O₃, a group I-based metal oxide, BaO, NaF, TiO₂, SnO, ZnO, and an adhesion enhancement component,
wherein the P₂O₅ is included by 40 wt% to 55 wt% based on a total weight of the glass frit,
wherein the SiO₂ is included by 5 wt% to 15 wt% based on the total weight of the glass frit,
wherein the B₂O₃ is included by 5 wt% to 10 wt% based on the total weight of the glass frit,
wherein the group I-based metal oxide is included by 3 wt% to 10 wt% based on the total weight of the glass frit,
wherein the ZnO is included by 10 wt% to 25 wt% based on the total weight of the glass frit, and
wherein the TiO₂ is included by 0.1 wt% to 5 wt% based on the total weight of the glass frit.

2. The coating composition of claim 1, wherein the BaO is included by 0.1 wt% to 5 wt% based on the total weight of the glass frit,
wherein the NaF is included by 0.1 wt% to 2 wt% based on the total weight of the glass frit, and
wherein the SnO is included by 0.1 wt% to 2 wt% based on the total weight of the glass frit.

3. The coating composition of claim 1 or 2, wherein the TiO₂ is included by 10% to 30% based on a weight of the ZnO.

4. The coating composition of any one of claims 1 to 3, wherein the group I-based metal oxide includes Na₂O and K₂O.

5. The coating composition of any one of claims 1 to 4, wherein the adhesion enhancement component includes a metal oxide having at least one selected from the group of Co₃O₄, NiO, Fe₂O₃ and MnO₂, and
wherein the adhesion enhancement component is included by 0.1 wt% to 4 wt% based on the total weight of the glass frit.

6. A cooking appliance (1) comprising:
a cavity (11) having a cooking chamber (12);
a door (14) to selectively open/close the cooking chamber (12); and
at least one heating source (13, 15, 16) providing heat for heating an object to be cooked in the cooking chamber (12),
wherein at least one of the cavity (11) and the door (14) includes:
a metallic base material (11a, 14a); and
a functional layer (11b, 14b) on the metallic base material(11a, 14a), and is formed by the coating composition of any one of claims 1 to 5.

7. The cooking appliance (1) of claim 6, further comprising:
a buffer layer (11c, 14c) interposed between the metallic base material(11a, 14a) and the functional layer(11b, 14b).

8. The cooking appliance (1) of claim 6 or 7, wherein the BaO is included by 0.1 wt% to 5 wt% based on the total weight of the glass frit,
wherein the NaF is included by 0.1 wt% to 2 wt% based on the total weight of the glass frit, and
wherein the SnO is included by 0.1 wt% to 2 wt% based on the total weight of the glass frit.

9. The cooking appliance (1) of any one of claims 6 to 8, wherein the TiO₂ is included by 10% to 30% based on a weight of the ZnO.

10. The cooking appliance (1) of any one of claims 6 to 9, wherein the adhesion enhancement component includes a metal oxide having at least one selected from the group of Co₃O₄, NiO, Fe₂O₃ and MnO₂, and
wherein the adhesion enhancement component is included by 0.1 wt% to 4 wt% based on the total weight of the glass frit.

## Patentansprüche

1. Beschichtungszusammensetzung aufweisend:
eine Glasfritte, die P₂O₅, SiO₂, B₂O₃, ein auf Gruppe I basierendes Metalloxid, BaO, NaF, TiO₂, SnO, ZnO und eine Haftverbesserungskomponente enthält,
wobei das P₂O₅ mit 40 Gew.% bis 55 Gew.% auf Basis des Gesamtgewichts der Glasfritte enthalten ist,
wobei das SiO₂ mit 5 Gew.% bis 15 Gew.% auf Basis des Gesamtgewichts der Glasfritte enthalten ist,
wobei das B₂O₃ mit 5 Gew.% bis 10 Gew.% auf Basis des Gesamtgewichts der Glasfritte enthalten ist,
wobei das auf Gruppe I basierende Metalloxid mit 3 Gew.% bis 10 Gew.% auf Basis des Gesamtgewichts der Glasfritte enthalten ist,
wobei das ZnO mit 10 Gew.% bis 25 Gew.% auf Basis des Gesamtgewichts der Glasfritte enthalten ist, und
wobei das TiO₂ mit 0,1 Gew.% bis 5 Gew.% auf Basis des Gesamtgewichts der Glasfritte enthalten ist.

2. Beschichtungszusammensetzung nach Anspruch 1,
wobei das BaO mit 0,1 Gew.% bis 5 Gew.% auf Basis des Gesamtgewichts der Glasfritte enthalten ist,
wobei das NaF mit 0,1 Gew.% bis 2 Gew.% auf Basis des Gesamtgewichts der Glasfritte enthalten ist, und
wobei das SnO mit 0,1 Gew.% bis 2 Gew.% auf Basis des Gesamtgewichts der Glasfritte enthalten ist.

3. Beschichtungszusammensetzung nach Anspruch 1 oder 2,
wobei das TiO₂ mit 10 Gew.% bis 30 Gew.% auf Basis eines Gewichts des ZnO enthalten ist.

4. Beschichtungszusammensetzung nach einem der Ansprüche 1 bis 3, wobei das auf Gruppe I basierende Metalloxid Na₂O und K₂O enthält.

5. Beschichtungszusammensetzung nach einem der Ansprüche 1 bis 4,
wobei die Haftverbesserungskomponente ein Metalloxid enthält, das mindestens ein aus der folgenden Gruppe ausgewähltes aufweist: CO₃O₄, NiO, Fe₂O₃ und MnO₂, und
wobei die Haftverbesserungskomponente mit 0,1 Gew.% bis 4 Gew.% auf Basis des Gesamtgewichts der Glasfritte enthalten ist.

6. Kochgerät (1) aufweisend:
einen Hohlraum (11) mit einer Kochkammer (12);
eine Tür (14) zum selektiven Öffnen/Schließen der Kochkammer (12); und
mindestens eine Heizquelle (13, 15, 16), die Hitze zum Erhitzen eines in der Kochkammer (12) zu kochenden Objekts bereitstellt,
wobei der Hohlraum (11) und/oder die Tür (14) aufweist:
ein metallisches Basismaterial (11a, 14a); und
eine Funktionsschicht (11b, 14b), die auf dem metallischen Basismaterial (11a, 14a) angeordnet ist und aus der Beschichtungszusammensetzung nach einem der Ansprüche 1 bis 5 besteht.

7. Kochgerät (1) nach Anspruch 6, ferner aufweisend:
eine Pufferschicht (11c, 14c), die zwischen dem metallischen Basismaterial (11a, 14a) und der Funktionsschicht (11b, 14b) angeordnet ist.

8. Kochgerät (1) nach Anspruch 6 oder 7,
wobei das BaO mit 0,1 Gew.% bis 5 Gew.% auf Basis des Gesamtgewichts der Glasfritte enthalten ist,
wobei das NaF mit 0,1 Gew.% bis 2 Gew.% auf Basis des Gesamtgewichts der Glasfritte enthalten ist, und
wobei das SnO mit 0,1 Gew.% bis 2 Gew.% auf Basis des Gesamtgewichts der Glasfritte enthalten ist.

9. Kochgerät (1) nach einem der Ansprüche 6 bis 8,
wobei das TiO₂ mit 10 Gew.% bis 30 Gew.% auf Basis eines Gewichts des ZnO enthalten ist.

10. Kochgerät (1) nach einem der Ansprüche 6 bis 9,
wobei die Haftverbesserungskomponente ein Metalloxid enthält, das mindestens ein aus der folgenden Gruppe ausgewähltes aufweist: Co₃O₄, NiO, Fe₂O₃ und MnO₂, und
wobei die Haftverbesserungskomponente mit 0,1 Gew.% bis 4 Gew.% auf Basis des Gesamtgewichts der Glasfritte enthalten ist.

## Revendications

1. Composition de revêtement comprenant :
une fritte de verre contenant P₂O₅, SiO₂, B₂O₃, un oxyde à base d'un métal du Groupe I, BaO, NaF, TiO₂, SnO, ZnO, et un composant amplificateur d'adhérence,
dans laquelle le P₂O₅ est inclus à raison de 40 % en poids à 55 % en poids par rapport au poids total de la fritte de verre,
dans laquelle le SiO₂ est inclus à raison de 5 % en poids à 15 % en poids par rapport au poids total de la fritte de verre,
dans laquelle le B₂O₃ est inclus à raison de 5 % en poids à 10 % en poids par rapport au poids total de la fritte de verre,
dans laquelle l'oxyde à base d'un métal du Groupe I est inclus à raison de 3 % en poids à 10 % en poids par rapport au poids total de la fritte de verre,
dans laquelle le ZnO est inclus à raison de 10 % en poids à 25 % en poids par rapport au poids total de la fritte de verre, et
dans laquelle le TiO₂ est inclus à raison de 0,1 % en poids à 5 % en poids par rapport au poids total de la fritte de verre.

2. Composition de revêtement selon la revendication 1, dans laquelle le BaO est inclus à raison de 0,1 % en poids à 5 % en poids par rapport au poids total de la fritte de verre,
dans laquelle le NaF est inclus à raison de 0,1 % en poids à 2 % en poids par rapport au poids total de la fritte de verre, et
dans laquelle le SnO est inclus à raison de 0,1 % en poids à 2 % en poids par rapport au poids total de la fritte de verre.

3. Composition de revêtement selon la revendication 1 ou 2, dans laquelle le TiO₂ est inclus à raison de 10 % à 30 % par rapport au poids du ZnO.

4. Composition de revêtement selon l'une quelconque des revendications 1 à 3, dans laquelle l'oxyde à base d'un métal du Groupe I comprend Na₂O et K₂O.

5. Composition de revêtement selon l'une quelconque des revendications 1 à 4, dans laquelle le composant amplificateur d'adhérence comprend un oxyde métallique ayant au moins l'un choisi dans le groupe constitué par Co₃O₄, NiO, Fe₂O₃ et MnO₂, et
dans laquelle le composant amplificateur d'adhérence est inclus à raison de 0,1 % en poids à 4 % en poids par rapport au poids total de la fritte de verre.

6. Appareil de cuisson (1) comprenant :
une cavité (11) ayant une chambre de cuisson (12),
une porte (14) pour ouvrir/fermer sélectivement la chambre de cuisson (12) ; et
au moins une source de chauffage (13, 15, 16) fournissant de la chaleur pour chauffer un objet devant être cuit dans la chambre de cuisson (12),
dans lequel au moins l'une parmi la cavité (11) et la chambre (14) comprend :
un matériau de base métallique (11a, 14a) ; et
une couche fonctionnelle (11b, 14b) sur le matériau de base métallique (11a, 14a), qui est formée par la composition de revêtement de l'une quelconque des revendications 1 à 5.

7. Appareil de cuisson (1) selon la revendication 6, comprenant en outre une couche tampon (11c, 14c) interposée entre le matériau de base métallique (11a, 14a) et la couche fonctionnelle (11b, 14b).

8. Appareil de cuisson (1) selon la revendication 6 ou 7, dans lequel le BaO est inclus à raison de 0,1 % en poids à 5 % en poids par rapport au poids total de la fritte de verre,
dans lequel le NaF est inclus à raison de 0,1 % en poids à 2 % en poids par rapport au poids total de la fritte de verre, et
dans lequel le SnO est inclus à raison de 0,1 % en poids à 2 % en poids par rapport au poids total de la fritte de verre.

9. Appareil de cuisson (1) selon l'une quelconque des revendications 6 à 8, dans lequel le TiO₂ est inclus à raison de 10 % à 30 % par rapport au poids du ZnO.

10. Appareil de cuisson (1) selon l'une quelconque des revendications 6 à 9, dans lequel le composant amplificateur d'adhérence comprend un oxyde métallique ayant au moins l'un choisi dans le groupe constitué par CO₃O₄, NiO, Fe₂O₃ et MnO₂, et
dans lequel le composant amplificateur d'adhérence est inclus à raison de 0,1 % en poids à 4 % en poids par rapport au poids total de la fritte de verre.
